## Europäisches Patentamt
## European Patent Office
## Office européen des brevets

(19)

(11) Veröffentlichungsnummer: **0 069 196**
**B1**

# EUROPÄISCHE PATENTSCHRIFT

(45) Veröffentlichungstag der Patentschrift:
**25.01.89**

(51) Int. Cl.⁴: **G 06 F 15/20,** G 06 F 3/02

(21) Anmeldenummer: **82102554.1**

(22) Anmeldetag: **26.03.82**

(54) **Einrichtung zur Veränderung und Korrektur eines Textes.**

(30) Priorität: **08.07.81 DE 3126886**

(43) Veröffentlichungstag der Anmeldung:
**12.01.83 Patentblatt 83/2**

(45) Bekanntmachung des Hinweises auf die Patenterteilung:
**25.01.89 Patentblatt 89/4**

(84) Benannte Vertragsstaaten:
**CH DE FR GB IT LI**

(56) Entgegenhaltungen:
**EP-A-0 021 928**
**FR-A-2 248 558**

**3RD USA-JAPAN COMPUTER CONFERENCE
PROCEEDINGS, 10.-12. Oktober 1978, San
Francisco, California, USA, T. MATSUSHITA et
al.:"Personal computer-aided composition and
editing system"**

(73) Patentinhaber: **AEG Olympia Aktiengesellschaft,
Postfach 960, D-2940 Wilhelmshaven (DE)**

(72) Erfinder: **van Raamsdonk, Cornelis, Dipl.- Phys.,
Bergstrasse 59, D-3404 Adelebsen (DE)**

EP 0 069 196 B1

## Beschreibung

Die Erfindung betrifft eine Einrichtung der im Oberbegriff des Patentanspruchs 1 genannten Art zur Veränderung und Korrektur eines auf einem Aufzeichnungsträger maschinengeschriebenen Textes.

Einrichtungen dieser Art sind als Textautomaten bekannt und bieten umfangreiche Möglichkeiten für die Erstellung, Bearbeitung und Verarbeitung von Texten, wie z. B. automatische Fehlerkorrektur, Löschung und Einfügung von Textteilen, Umstellungen von Textteilen, automatische Silbentrennung, Rand- und Formatsteuerungen, Verwendung von gespeicherten Textbausteinen und Phrasen usw.

Nachteilig ist bei diesen bekannten Geräten die komplizierte Bedienung, die einen längeren Lernprozeß und ständige Übung erforderlich macht. Textbearbeitungen, die sich über die ganze Seite erstrecken, z. B. Umstellungen, Formatveränderungen und Formularbeschriftungen, sind zudem besonders dadurch erschwert, daß immer nur ein kleiner Bereich der eingespannten Seite zu sehen ist. Bei Textautomaten mit Bildschirm, die den letztgenannten Nachteil nicht aufweisen, ist die Bedienung wiederum sehr ermüdend.

Aus dem Aufsatz "PERSONAL COMPUTER-AIDED COMPOSITION AND EDITING SYSTEM" veröffentlicht in 3RD USA-JAPAN COMPUTER CONFERENCE PROCEEDINGS, OCT. 10-12, 1978, S. 56-60 ist eine Einrichtung der im Oberbegriff des Patentanspruchs 1 genannten Art bekannt, bei der oberhalb der Papierwalze einer Schreibmaschine eine Auflageplatte angeordnet ist, auf der das aus der Maschine heraustretende Papier plan aufliegt. Ein horizontal angeordneten, in vertikaler Richtung auf dem Papier verschiebbares Lineal sowie ein Eingabegriffel sind mit dem steuernden Prozessor der Maschine verbunden und dienen als Editier-Eingabemittel. Der Bediener hat das Lineal unter diejenige Zeile zu Verschieben, in der eine Text-Korrektur vorgenommen werden soll, und hat mit dem Eingabegriffel durch Antippen des Lineals die Korrekturspalte zu kennzeichnen. Sowohl das Lineal als auch dessen vertikale Führung sind als lineare Potentiometer ausgebildet, so daß die Stellung des Lineals und die Antipposition als elektrische Werte an den Prozessor zwecks Zuordnung der Korrekturstelle zu dem gespeicherten Text geliefert werden. Oberhalb der solcherart gekennzeichneten Position hat der Bediener nunmehr Korrekturmarkierungen mit dem Eingabegriffel aufzuzeichnen, wobei ein im Griffel angeordnetes Kontaktsystem dem Prozessor Richtungssignale zwecks Erkennung der Markierungsform liefert. Der Prozessor steuert daraufhin eine dementsprechende Änderung des Speicherinhaltes. Zusätzliche Befehle oder Daten können durch Antippen bestimmter Stellen auf dem Lineal und gleichzeitiges Betätigen einer Codetaste eingegeben werden.

Obwohl diese Einrichtung eine Bedienungsvereinfachung gegenüber üblichen Textautomaten mit sich bringt, sind doch noch immer bis zu fünf verschiedene Handgriffe einschließlich Betätigung einer Codetaste bei einer jeden Korrekturmaßnahme auszuführen. Vom Bediener wird daher noch immer eine erhebliche Konzentration während der Textbearbeitung gefordert.

Weiterhin ist aus AU-A1-6S 621/80 bekannt, ein Digitalisierungstableau als Aufnahme für einen Aufzeichnungsträger vorzusehen, von dem die Position eines aufgesetzten Eingabeschreibstiftes angebende Koordinatensignale unmittelbar abgenommen und einer Steuereinheit zugeführt sind, die sowohl die Lage aufgezeichneter Markierungen als auch deren Form erkennt, und daß auf dem Digitalisierungstableau Bereiche festgelegt sind, deren bei Aufsetzen des Eingabeschreibstiftes der Steuereinheit zugeführte Koordinatensignale in Funktionsbefehle umgesetzt werden.

Der Erfindung liegt die Aufgabe zugrunde, eine Einrichtung zur Korrektur und Veränderung eines maschinengeschriebenen Textes zu schaffen, deren Bedienung einfach, sinnfällig und leicht zu erlernen ist.

Diese Aufgabe wird erfindungsgemäß durch die im Anspruch 1 angegebenen Merkmale gelöst.

Die vorliegende Erfindung stellt ein grundlegend neues Textbe- und Textverarbeitungsgerät mit neuartiger Schnittstelle Mensch-Maschine dar, das eine Reihe erheblicher Vorteile aufweist und, in Analogie zu dem bekannten Begriff "Computer Aided Design" mit "Computer Text Design" bezeichnet werden könnte. Trotz der Möglichkeit, alle nur denkbaren Textbe- und -verarbeitungsvorgänge einschließlich graphischer Darstellungen auszuführen, ist das Erlernen der Bedienung denkbar einfach. Es sind - im Gegensatz zu den bekannten Geräten - keine Befehls-Code-Tasten in einzuhaltender Reihenfolge zu bedienen, und alle Korrektur- und Veränderungsmaßnahmen können in der Art, in der ein Autor einen Korrekturabzug mit seinem Schreibstift korrigiert, manuell vorgenommen werden. Es ist sogar möglich, die aus dem graphischen Gewerbe bekannten Korrekturzeichen anzuwenden, um die Durchführung gewünschter Korrektur- und Veränderungsmaßnahmen zu bewirken.

Der Text ist nicht nur während der Erstellungszeit sondern auch für die Korrektur- und Veränderungsmaßnahmen in seiner Gesamtheit (Textdaten, Form und Kontext) im Original sichtbar, und die eingezeichneten Korrekturmaßnahmen bleiben erkennbar. Die Überschaubarkeit entspricht dabei derjenigen eines Ganzseitenbildschirm-Textautomaten, jedoch ohne dessen anstrengende und ermüdende Bedienung sowie der Notwendigkeit des relativ schwierigen Erlernens der Bedienungsfunktionen.

Ein besonders kompaktes Gerät ergibt sich dadurch, daß das Druck- oder Schreibwerk als Koordinatenschreibwerk über dem Tableau angeordnet ist. Hierbei weist ein Tintenschreibwerk besondere Vorteile auf, weil es die Aufzeichnungen ohne Schlagbeanspruchungen für das Tableau vornimmt.

Wird ein Mosaikschreibwerk verwendet, so sind beliebige graphische Darstellungen möglich, wobei auch die Möglichkeit zur internen Durchführung dafür benötigter oder davon abhängiger Berechnungen vorgesehen sein kann.

Weitere Vorteile der Erfindung ergeben sich aus den Zeichnungen und der nachfolgenden Beschreibung eines Ausführungsbeispieles. Es zeigen

Figur 1 eine Ansicht eines Ausführungsbeispieles,
Figur 2 ein Blockschaltbild und
Figur 3 eine detaillierte Darstellung eines Teiles der Figur 1.

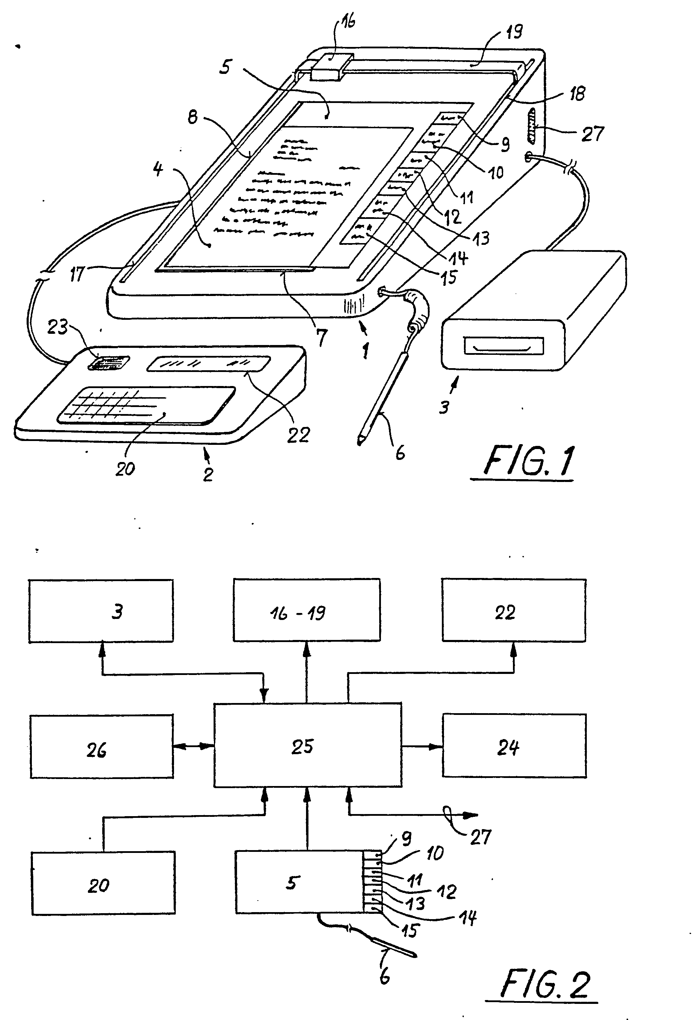

Das in Figur 1 dargestellte Gerät besteht aus einem Digitalisierungs- und Schreibgerät 1, einer Bedienungskonsole 2 und einem Datenspeichergerät mit entnehmbarem Datenträger 3, die über Leitungsverbindungen miteinander in Wirkverbindung stehen und im wesentlichen die in Figur 2 gezeigten Funktionsblöcke aufweisen.

Die von einem beschrifteten Aufzeichnungsträger 4 - z. B. einem Brief - bedeckte pultförmige Auflagefläche des Digitalisierungs- und Schreibgerätes 1 wird von einem Digitalisierungstableau 5 gebildet, das bei Berührung des aufgelegten Aufzeichnungsträgers 4 mit der Spitze eines mit dem Gerät wirkverbundenen Eingabe-Schreibstiftes 6 Koordinatensignale erzeugt, durch die die Lage des jeweiligen Berührungspunktes angegeben wird. Der Eingabe-Schreibstift 6 weist eine schreibfähige Spitze - etwa nach Art eines Kugelschreibers - auf, so daß die Berührungsstellen auf dem Papier sichtbar markiert werden können. Derartige Digitalisierungstableaus mit schreibfähigen Eingabe-Schreibstiften sind an sich bekannt und werden deshalb hier nicht näher beschrieben.

Zwei rechtwinklig zueinander angeordnete Anschlagleisten 7, 8 dienen dazu, den Aufzeichnungsträger 4 an einer definierten Stelle auf dem Digitalisierungstableau 5 aufzulegen. Am rechten Rand des Digitalisierungstableaus 5 sind einzelne Bereiche 9 bis 15 als Berührungstasten abgeteilt, über die Eingabedaten durch Berührung eines der Bereiche 9 bis 15 mit dem Eingabe-Schreibstift 6 eingegeben werden können. Die einzelnen Bereiche 9 bis 15 sind mit einer ihre Funktion kennzeichnenden Beschriftung oder Symbol versehen und können - je nach Benutzungshäufigkeit und Bedeutung - unterschiedlich groß gestaltet sein. Den Koordinatensignalen eines jeden Bereiches 9 bis 15, die durch Berührung mit dem Eingabe-Schreibstift 6 erzeugt werden können; sind vorgegebene Funktionen zugeordnet, so daß die Wirkung von Eingabetasten gegeben ist.

Über dem Digitalisierungstableau 5 ist der Tintenschreibkopf 16 eines Koordinatenschreibwerkes angeordnet, der auf einem in Führungsschlitzen 17, 18 geführten Führungsbügel 19 in beiden Koordinatenrichtungen verschiebbar ist und somit jeden Punkt des- Digitalisierungstableaus 5 zu erreichen vermag. Durch diese Anordnung kann ein auf dem Digitalisierungstableau 5 liegender Aufzeichnungsträger beschriftet werden, wobei ein Tintenschreibwerk deshalb besonders vorteilhaft ist, weil das Schreiben ohne Aufschlag erfolgt und das Digitalisierungstableau dadurch nicht beschädigt werden kann.

Die Bedienungskonsole 2 weist ein alpha/numerisches und Funktions-Tastenfeld 20, z. B. eine übliche, nach DIN genormte Schreibmaschinentastatur auf, die einen bei Textbe- und Textverarbeitungsgeräten bekannten Aufbau haben kann. Sie verfügt weiterhin über eine Anzeigeeinrichtung 22, auf der vom Bediener eingegebene Funktionsbefehle, Hinweise für eine Bedienerführung oder die durch eingegebene Befehle bewirkten Änderungen, z. B. in einem gegebenen Text, sichtbar gemacht werden können. Daneben ist die Lautsprecheröffnung 23 einer Sprachausgabe-Einrichtung 24 (Figur 2) zu sehen, über die ebenfalls Hinweise für den Bediener ausgegeben werden können.

Wie Figur 2 weiter zu entnehmen ist, wird die interne Steuerung der Funktionsabläufe und des Zusammenwirkens der einzelnen Baugruppen von einer Steuereinheit 25 durchgeführt, die z. B. von einem Mikrocomputer gebildet werden kann. Ein als Arbeitsspeicher 26 fungierender Datenspeicher dient dazu, die über das Tastenfeld 20 oder das Digitalisierungstableau 5 eingegebenen Daten aufzunehmen, die zwecks Archivierung auf einen Datenträger des Datenspeichergerätes 3 übertragen werden können. Als Datenspeichergerät ist hier ein Diskettengerät vorgesehen, dessen Disketten austauschbar und archivierbar sind. Über eine Datenfernübertragungsschnittstelle 27 können außerdem Daten aus dem Arbeitsspeicher 26 an eine Fernleitung abgegeben und zu einem entfernten Empfänger übertragen bzw. Daten von dort empfangen werden.

Zur Erstellung eines Textes, z. B. eines Briefes, legt der Bediener zunächst einen Aufzeichnungsträger (Briefbogen) auf das Digitalisierungstableau 5 mit Anschlag an den Anschlagleisten 7, 8 auf. Über das Tastenfeld 20 der Bedienungskonsole 2 gibt er die zur Texterstellung erforderlichen Steuerbefehle (wie z. B. zur Einstellung des Tintenschreibkopfes auf die gewünschte Textanfangsstelle usw.) sowie die Textdaten ein. Dabei kann er gegebenenfalls durch Hinweise auf der Anzeigeeinrichtung (z. B. "Anfangsposition eingeben") unterstützt werden (Bedienerführung).

Die eingegebenen Daten gelangen in codierter Form in den Arbeitsspeicher 26 und werden gleichzeitig auf dem Aufzeichnungsträger 4 vom Tintenschreibkopf 16 aufgezeichnet, der von Ansteuersignalen der Steuereinheit 25 in die jeweilige Aufzeichnungsposition bewegt und zur Erzeugung des gewünschten Zeichens angesteuert wird. Eine Information über die jeweilige zeilen- und spaltenmäßige Position der eingegebenen Daten auf dem Aufzeichnungsträger 4 wird ebenfalls im Arbeitsspeicher 26 abgespeichert.

Während der Erstellung des Briefes kann der Bediener den entstehenden Text in seiner Gesamtheit beobachten, wie es sonst nur bei Textverarbeitungsgeräten mit Ganzseitenbildschirm möglich ist.

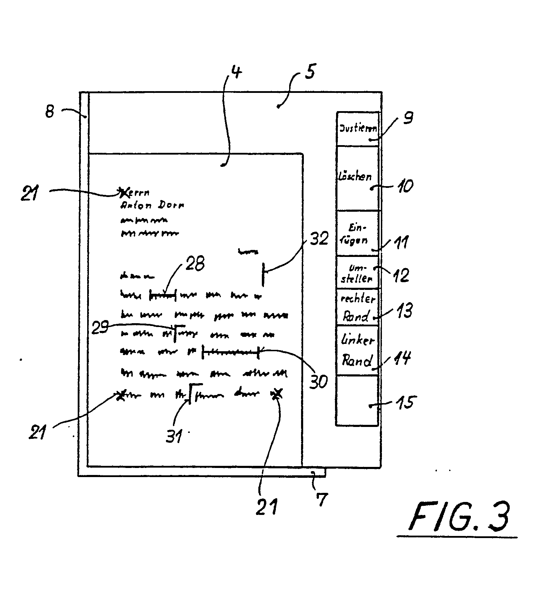

Nach Aufzeichnung des letzten Zeichens bewirkt ein Rückkehrbefehl, daß der Tintenschreibkopf 16 in die dargestellte Ruheposition zurückkehrt, so daß der Aufzeichnungsträger 4 frei zugänglich ist. Der Bediener kann nunmehr alle gewünschten Fehlerkorrekturen, Textveränderungen, Form- und Kontextgestaltungen auf dem Digitalisierungstableau 5 mit Hilfe des Eingabe-Schreibstiftes 6 vornehmen. Wie in Figur 3 dargestellt, muß der Bediener zunächst durch Antippen des mit der Aufschrift "Justieren" beschrifteteten, als Berührungstaste vorgesehenen Bereiches 9 mit dem Eingabe-Schreibstift 6 und nachfolgendes Markieren (z. B. Ankreuzen) eines oder mehrerer Textzeichen auf dem Aufzeichnungsträger 4 eine Lagekennzeichnung des Textes auf dem Digitalisierungstableau 5 veranlassen. Die Steuereinheit 25 bewirkt aufgrund der Koordinatensignale des berührten Bereiches 9, daß mit Hilfe der durch Markierungen (Ankreuzen) erzeugten Koordinatensignale eine interne Lagezuordnung zu den im Arbeitsspeicher 26 abgelegten Daten durchgeführt wird. Damit wird erreicht, daß die sichere Zuordnung der Positionsangaben im Arbeitsspeicher 26 zur Lage der Textzeichen auf dem Aufzeichnungsträger 4 auch dann gewährleistet ist, wenn der Aufzeichnungsträger 4 zwischenzeitlich vom Digitalisierungstableau 5 heruntergenommen war und nicht mehr genau aufgelegt worden ist oder auf einem anderen Druckwerk erstellt und nunmehr - nach Einlesen seiner gespeicherten Textdaten in den Arbeitsspeicher 26 - auf dem Digitalisierungstableau 5 weiterbearbeitet werden soll. Es ist sinnvoll, zur Lagekennzeichnung jeweils drei Textzeichen zu markieren, etwa das erste Zeichen in der ersten Zeile, das erste Zeichen in der letzten Zeile und das letzte Zeichen in der letzten Zeile. Aus dem Abstand der ersten und der letzten Zeile sowie der dem Arbeitsspeicher 26 entnehmbaren Zeilenzahl kann die Steuereinheit 25 dann den Zeilenabstand, aus dem Abstand von erstem und letztem Zeichen der letzten Zeile und der dem Arbeitsspeicher ebenfalls entnehmbaren Zeichen- (und Leerzeichen-) zahl den Spaltenabstand bestimmen, so daß auch ein auf einem anderen Druckwerk mit anderer Zeilen und Spaltenteilung erstellter Aufzeichnungsträger bearbeitet werden kann. Durch Markieren mehrerer Zeichen kann auch ein evtl. Winkelversatz des neu aufgelegten Aufzeichnungsträgers erkannt und eliminiert werden.

Alle darauffolgend auf dem Aufzeichnungsträger 4 eingetragenen Textbearbeitungsmarkierungen können nunmehr im Arbeitsspeicher 26 positionsgenau im Kontext zugeordnet werden. In der ersten Textzeile soll z. B. ein Wort entfernt werden. Der Bediener streicht dieses Wort 28 durch und berührt den mit "Löschen" beschrifteten Bereich 10, Woraufhin im Arbeitsspeicher 26 das Wort gelöscht und der gespeicherte Text soweit verschoben wird, daß die entstandene Lücke aufgefüllt ist. An einer anderen Stelle soll Text eingefügt werden. Nach Eintragung der Bearbeitungsmarkierung 29 berührt der Bediener den mit "Einfügen" beschrifteten Bereich 11, tastet den einzufügenden Text auf der Bedienungskonsole 2 ein und berührt den Bereich 11 ein zweites Mal. Der eingetastete Text wird nunmehr im Arbeitsspeicher 26 an der gekennzeichneten Stelle nach entsprechender Verschiebung des Speicherinhaltes eingefügt. Als nächstes soll ein Teil einer Zeile entfernt und an anderer Stelle eingefügt werden. Der Bediener muß dazu den umzustellenden Text durch eine Bearbeitungsmarkierung 30 kennzeichnen, den mit "Umstellen" beschrifteten Bereich 12 berühren und an derjenigen Stelle eine Bearbeitungsmarkierung 31 eintragen, an der der Text eingefügt werden soll. Durch Einzeichnen eines senkrechten Striches 32 und Berühren des Bereiches 13 "Rechter Rand" kann ein ungleicher Rand ausgeglichen werden (Umwandlung eines Flattersatzes in Blocksatz) oder verschoben werden, während bei Berührung des Bereiches 14 "Linker Rand" nach Einzeichnung eines senkrechten Striches der linke Rand entsprechend verschoben wird. Um Verwechslungen mit Textbearbeitungsmarkierungen zu vermeiden, werden diese senkrechten Striche 32, zweckmäßigerweise oberhalb des Satzspiegels eingetragen. Die beschriebenen, durch Textbearbeitungsmarkierungen angegebenen Textbearbeitungsabläufe stellen nur einige wenige Beispiele dar. Darüberhinaus sind zahlreiche weitere Textbe- und -verarbeitungen denkbar und möglich, die auf diese Weise vorgenommen werden können.

Es ist auch möglich, einzelnen als Berührungstasten vorgesehenen Bereichen des Digitalisierungstableaus 5 Speicherbereiche zuzuordnen, in denen Textphrasen, Standardtexte etc. abgespeichert und durch Berühren des entsprechenden Berührungstasten-Bereiches derart abrufbar sind, daß die Steuereinheit 25 den Tintenschreibkopf 16 zu deren Wiedergabe ansteuert. Bei Verwendung eines Rasterschreibkopfes, der zur variablen graphischen Gestaltung fähig ist, wie etwa der im Ausführungsbeispiel vorgesehene Tintenschreibkopf 16, können einem Berührungstasten-Bereich auch Zeichensymbole zugeordnet sein. Die Lage von Berührungstasten-Bereichen sowie auch die damit auszulösenden Funktionen können - je nach Einsatzgebiet und persönlichen Bedürfnissen - auch vom Anwender selbst definiert werden. Dazu kann eine geräteinterne Programmroutine vorgesehen sein, die - nachdem sie aufgerufen worden ist - von einer Diskette, einem speziellen Kunden-Speichermodul oder über die Tastatur 20, 21 eingegebene Daten Bereichen auf dem Digitalisierungstableau 5 zuordnet, die mit dem Eingabe-Schreibstift 6 markiert worden sind. Es ist beispiels,weise auch denkbar, nach Initialisierung der genannten Programmroutine mit dem Tintenschreibkopf 16 die vorgesehenen Bereiche anzuführen und auf einem aufgelegten Aufzeichnungsträger aufzuzeichnen sowie durch Eingabe der Beschriftung (mit Text und/oder Symbol) und ggfs. entsprechenden Informationen den markierten Bereichen jeweils eine Funktion zuzuordnen, wobei die Programmroutine die Übernahme dieser Festlegung durch die Steuereinheit 25 veranlaßt. Die beschrifteten Teile des Aufzeichnungsträgers könnten dann auf dem Digitalisierungstableau angebracht werden und die Berührungstasten-Bereiche kennzeichnen. Die Steuereinheit 25 kann auch zusätzlich so ausgelegt sein, daß mit dem Eingabe-Schreibstift 6 auf einem auf dem Digitalisierungstableau 5 aufliegenden Aufzeichnungsträger aufgezeichnete graphische Darstellungen, z. B. Kurven, Diagramme etc., gemäß der erzeugten Koordinatensignale in den Arbeitsspeicher eingespeichert werden. Durch Eingabe entsprechender Funktionsbefehle, etwa zur Ermittlung von Flächeninhalten u.ä., kann von der Steuereinheit 25 eine Bearbeitung ausgeführt werden, und das Schreibwerk kann die gespeicherten graphischen Darstellungen, eine bearbeitete Version oder ein Bearbeitungsergebnis ausgeben.

Alle zweckmäßigen Hinweise für den Bediener, beispielsweise Bestätigungen für die erfolgreiche Betätigung eines der Berührungstasten-Bereiche 9 bis 15, Aufforderung zur Eingabe eines weiteren Funktionsbefehles oder weiterer Textdaten usw. können, je nach Zweckmäßigkeit und sofern beide Einrichtungen vorgesehen sind, auf der Anzeigeeinrichtung 22 dargestellt oder akustisch über den Lautsprecher 23 als Tonsignale oder Sprache ausgegeben werden. Weiterhin ist es nicht zwingend erforderlich, alle für die Bedienung des Digitalisierungstableaus 5 vorgesehenen Funktionstasten durch Berührungsbereiche auf dem Digitalisierungs- und Schreibgerät 1 zu realisieren; soweit zweckmäßig können solche Tasten auch auf der Bedienungskonsole 2 angeordnet sein. Schließlich ist auch die beschriebene Aufteilung in drei durch Kabel miteinander verbundene Einzelgeräte nich zwingend erforderlich Das Schreibwerk könnte z. B. als selbständiges, mit der Gerätekonfiguration durch Kabel verbundens Gerät vorgesehen sein, alle getrennt dargestellten Geräte könnten in einem Gehäuse angeordnet sein oder eine beliebige anderen Aufteilung könnte vorgenommen sein.

**Patentansprüche**

1. Einrichtung zur Veränderung und Korrektur eines auf einem Aufzeichnungsträger maschinengeschriebenen Textes, dessen Textdaten in einem Speicher abgelegt sind, wobei der Aufzeichnungsträger auf einer Aufnahme angeordnet ist und Textbearbeitungsmarkierungen mit einem mit der Einrichtung zusammenwirkenden Eingabeschreibstift auf dem Aufzeichnungsträger manuell aufzeichenbar sind, die in Lage und Form der Markierungen repräsentierende Signale umgewandelt und einer Steuereinheit zugeführt, ggfs. in Verbindung mit über eine Tastatur eingegebenen Befehlen und neuen Textdaten von dieser Steuereinheit in Steuersignale umgewandelt und zur automatischen Änderung des Speicherinhaltes verwendet werden, dadurch gekennzeichnet, daß als Aufnahme für den Aufzeichnungsträger (4) ein Digitalisierungstableau (5) vorgesehen ist, von dem die Position des aufgesetzten Eingabeschreibstiftes (6) angebende Koordinatensignale unmittelbar abnehmbar und der Steuereinheit (25) zuführbar sind, daß auf dem Digitalisierungstableau (5) als Berührungstasten ausgebildete Bereiche (9 bis 15) festgelegt sind, deren bei Aufsetzen des Eingabeschreibstiften (6) abnehmbare Koordinatensignale von der Steuereinheit (25) in Funktionsbefehle umgesetzt werden und daß ein Druck- bzw. Schreibkopf (16) eines Druck- oder Schreibwerkes in Zeilen- und Spaltenrichtung verschiebbar über dem Digitalisierungstableau (5) in der Weise angeordnet ist, daß ein auf dem Digitalisierungs tableau (5) angeordneter Aufzeichnungsträger (4) mit dem Druck- bzw. Schreibkopf (16) beschreibbar ist.

2. Einrichtung nach Anspruch 1, dadurch gekennzeichnet, daß ein Schreibwerk mit einem Tintenschreibkopf vorgesehen ist.

3. Einrichtung nach Anspruch 1 oder 2, dadurch gekennzeichnet, daß ein Druck- oder Schreibwerk zur Ausgabe von im Speicher (26) enthaltenen Textdaten vorgesehen ist.

4. Einrichtung nach Anspruch 3, dadurch gekennzeichnet, daß der Druck- bzw. Schreibkopf (16) des Druck- oder Schreibwerkes in Zeilen- und Spaltenrichtung verschiebbar über dem Digitalisierungstableau (5) in der Weise angeordnet ist, daß ein auf dem Digitalisierungstableau (5) angeordneter Aufzeichnungsträger (4) mit dem Druck- bzw.

Schreibkopf (16) beschreibbar ist.

5. Einrichtung nach Anspruch 3 oder 4, <u>dadurch gekennzeichnet</u>, daß ein Schreibwerk mit einem Tintenschreibkopf vorgesehen ist.

**Claims**

1. Device for changing and correcting a text typed onto a recording carrier, whose textual data are deposited in a memory, wherein the recording carrier is arranged on a receiver and test-processing marks can be manually inscribed on the recording carrier with an input stylus functioning together with the device, which marks are converted into signals representing the position and form of the marks and fed into a control unit, together with commands entered through a keyboard, if applicable, and new textual data from this control unit are converted into signals and are used to automatically alter the contents of the memory, characterised in that a digitalising indicator panel (5) is provided as a receiver for the recording medium, from which panel the co-ordinator signals indicating the position of the applied input stylus (6) can be extracted directly and supplied to the control unit (25), that indicated regions (9 to 15) are defined to form touch-sensitive keys on the digitalising indicator panel, from which regions the coordinate signals extractable by application of the input stylus (6) are converted by the control unit into functional commands, and that a printing or recording head (16) of a printing or typing mechanism movable along lines and columns over the digitalising indicator panel (5) is arranged in such a way that a recording carrier (4) arranged on the digitalising indicator panel (5) can be inscribed by the printing or typing element (16).

2. Device according claim 1, characterised in that a typing mechanism with an ink-printing head is provided.

3. Device according to claim 1 or 2, characterised in that a printing or typing mechanism is provided for printing out the textual data contained in the memory (26).

4. Device according to claim 3, characterised in that the printing or typing head (16) of the printing or typing mechanism is arranged to be movable over the digitalising indicator panel along its lines and columns, in such a manner that a recording carrier (4) arranged on the digitalising indicator panel (5) can be inscribed by the printing or typing head (16).

5. Device according to claim 3 or 4, characterised in that a typing mechanism with an ink-printing head is provided.

**Revendications**

1. Dispositif destiné à la modifiction et à la correction d'un texte écrit à la machine sur un support d'inscription dont les données de texte sont stockées dans une mémoire, le support d'inscription étant disposé sur un organe de réception et des marquages de traitement de texte pouvant être inscrits manuellement sur le suport d'inscription au moyen d'un crayon d'écriture et d'introduction de données, coopérant avec le dispositif, ces marquages étant transformés en signaux représentatifs de l'emplacement et de la forme de marquages et transmis à une unité de commande, transformés le cas échéant en liaison avec des ordres et de nouvelles données de texte introduits par l'intermédiaire d'un clavier et utilisés par cette unité de commande pour la modification du contenu de la mémoire, dispositif caractérisé en ce qu'on prévoit, comme organe de réception pour le support (4) d'inscriptions, un tableau (5) de numérisation à partir duquel des signaux de coordonnées, indiquant la position du crayon (6) d'écriture et d'introduction de données, placé sur ce tableau, peuvent être captés directement et transmis à l'unité (25) de commande; en ce que, sur le tableau (5) de numérisation, sont déterminées des zones (9 à 15) constituées en tant que touches à effleurement, dont les signaux de coordonnées captables en plaçant dessus le crayon (6) d'écriture et d'introduction de données sont transformés par l'unité (25) de commande en ordres de fonction et en ce qu'une tête (16) d'impression ou d'écriture d'un dispositif d'impression ou d'écriture, peut être déplacée dans le sens des lignes des colonnes au-dessus du tableau (5) de numérisation, de façon telle qu'un support (4) d'écriture, disposé sur le tableau (5) de numérisation puisse recevoir des inscriptions au moyen de la tête (16) d'impression ou d'écriture.

2. Dispositif selon la revendication 1, caractérisé en ce qu'on y prévoit un dispositif d'écriture comportant une tête d'écriture à l'encre.

3. Dispositif selon la revendication 1 ou 2, caractérisé en ce qu'un dispositif d'impression ou d'écriture est prévu pour l'édition de données de texte contenues dans la mémoire (26).

4. Dispositif selon la revendication 3, caractérisé en ce que la tête (16) d'impression ou d'écriture du dispositif d'impression ou d'écriture peut être déplacée dans le sens des lignes et des colonnes au-dessus du tableau (5) de numérisation, de façon telle que l'on peut porter des inscriptions au moyen de la tête (16) d'impression, ou d'écriture, sur un support (4) d'inscriptions disposé sur le tableau (5) de numérisation.

5. Dispositif selon la revendication 3 ou 4, caractérisé en ce que l'on prévoit un dispositif d'écriture comportant une tête d'écriture à l'encre.

_FIG.1_

_FIG.2_

_FIG. 3_